# Europäisches Patentamt
## European Patent Office
## Office européen des brevets

(19)

(11) Veröffentlichungsnummer: **0 047 813**
**B1**

(12) **EUROPÄISCHE PATENTSCHRIFT**

(51) Int. Cl.⁴: **G 01 M 17/00**

(45) Veröffentlichungstag der Patentschrift:
06.02.85

(21) Anmeldenummer: 81104289.4

(22) Anmeldetag: 04.06.81

(54) Prüfsystem zur Diagnose von Kraftfahrzeugen oder Fahrzeugbestandteilen.

(30) Priorität: 13.09.80 DE 3034636

(43) Veröffentlichungstag der Anmeldung:
24.03.82 Patentblatt 82/12

(45) Bekanntmachung des Hinweises auf die Patenterteilung:
06.02.85 Patentblatt 85/6

(84) Benannte Vertragsstaaten:
CH DE FR GB LI

(56) Entgegenhaltungen:
DE - A - 2 165 976
DE - A - 2 362 176
DE - U - 6 933 578
DE - U - 7 003 772
DE - U - 7 720 967
US - A - 3 789 658
US - A - 4 121 452

(73) Patentinhaber: ROBERT BOSCH GMBH, Postfach 50,
D-7000 Stuttgart 1 (DE)

(72) Erfinder: Anlauf, Jürgen, Dipl.-Ing., Eckenerstrasse 14,
D-7320 Göppingen (DE)
Erfinder: Breckel, Werner, Ing. grad., Austrasse 8,
D-7317 Wendlingen (DE)
Erfinder: Groetzner, Kurt, Ing. grad., Schwabbacher
Strasse 15, D-7000 Stuttgart 40 (DE)
Erfinder: Kehle, Robert, Dipl.-Ing., Tannenstrasse 23,
D-7333 Ebersbach (DE)
Erfinder: Schneider, Richard, Ing. grad., Weinhof 9,
D-7900 Ulm (DE)
Erfinder: Wurst, Bert, Dipl.-Ing., Karlstrasse 19,
D-7141 Möglingen (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Stand der Technik

Die Erfindung geht aus von einem Prüfsystem nach der Gattung des Hauptanspruchs. In der Kraftfahrzeugtechnik ist es bereits lange üblich, verschiedene am Kraftfahrzeug zu prüfende Grössen mittels Prüfgeräten zu erfassen. Dazu wird jeweils ein einzelnes Prüfgerät verwendet, dessen Messkabel mit dem Prüfling verbunden werden. Wird eine andere Messung durchgeführt, so werden die Messkabel des neuen Prüfgerätes mit den zu prüfenden Teilen des Kraftfahrzeuges verbunden. Der Messbereich und die zu prüfende Funktion müssen dabei von dem zu Prüfenden zuvor eingestellt werden. War der Messbereich falsch gewählt, so muss der Bedienende seinen Einstellplatz verlassen und am Gerät eine Änderung des Messbereichs vornehmen. Aus der US-A 4 121 452 ist eine Testvorrichtung für Kraftfahrzeuge bekannt, die rechnergesteuert ist und weitgehend automatisch arbeitet. Das Prüfsystem ist jedoch in seinem Aufbau fest vorgegeben und nur wenig veränderbar. Kleinere Werkstätten müssen eine Vielzahl von Prüfmöglichkeiten in Kauf nehmen, die sie selbst im Augenblick noch gar nicht benötigen, zusätzliche Prüfschritte, die bei weiterentwickelten Kraftfahrzeugen nötig wären, sind mit dem beschriebenen Prüfsystem nicht oder nur mit grossem Aufwand durchführbar, da der verwendete Prüfrechner bereits alle möglichen Inspektionsarten gespeichert haben muss.

Das DE-U 7 720 967 zeigt und beschreibt einen Prüfschrank für Geräte der Haustechnik, bei dem ein Gehäuse sämtliche Prüfgeräte umfasst. Die Aussenabmessungen dieses Gehäuses betragen ein Vielfaches einer Grundrastereinheit. Die dort gezeigte Einschubtechnik ist für die Kraftfahrzeugdiagnose nicht geeignet, da sich auf diese Art und Weise nur komplette Prüfstände zusammenbauen lassen, deren Aussenabmessungen durch den Schrank gegeben sind. Werden nicht sämtliche Prüf- und Messgeräte benötigt, sind Blindplatten anzubringen. Weiterhin ist unvorteilhaft, dass die solchermassen befestigten Prüfgeräte nicht für Einzelmessungen verwendet werden können, die beispielsweise an einem anderen Arbeitsplatz gerade nötig sind. Eine Flexibilität der einzelnen Messgeräte des Prüfsystems ist damit nicht gegeben.

Vorteile der Erfindung

Das erfindungsgemässe Prüfsystem mit den kennzeichnenden Merkmalen des Hauptanspruchs hat demgegenüber den Vorteil, dass die Prüfgeräte leicht stapelbar sind und durch ihre Verbindung über Steuerleitungen nur ein Kabelsatz zum Kraftfahrzeug geführt werden muss, durch den sämtlichen Prüfgeräte ihre Messsignale erhalten. Als weiterer Vorteil ist anzusehen, dass das Prüfsystem nach den zu messenden Grössen individuell zu gestalten ist, so dass nur der benötigte Messgerätepark angeschlossen werden muss. Durch die spezielle Gestaltung der Steckeinrichtungen wird erreicht, dass das Prüfsystem auch von Laien sicher zusammenzustellen ist, so dass Einarbeitungsphasen entfallen. Als weiterer Vorteil ist anzusehen, dass sämtliche Messgeräte des Systems auch einzeln verwendbar sind.

Durch die in den Unteransprüchen aufgeführten Massnahmen sind vorteilhafte Weiterbildungen und Verbesserungen des im Hauptanspruch angegebenen Prüfsystems möglich. Die zentrale Steuereinheit, die in einem Prüfgerät integriert ist, ist einfach mittels eines Mikroprozessors zu realisieren, wobei die für die Steuerung relevanten Daten in einer Speichereinheit gespeichert sind. Hier können beispielsweise Messwerte für die Messfolge gespeichert sein. Um das Messsystem universell zu gestalten, ist es vorteilhaft, die Speichereinheit von aussen steckbar anzubringen. Dadurch ist es möglich, das Prüfsystem an verschiedene Fahrzeugtypen und ihre speziellen Daten anzupassen. Um die universelle Einsetzbarkeit des Prüfsystems zu erweitern, kann es im Einzelfall auch günstig sein, nicht nur der zentralen Steuereinheit eine Speichereinheit zuzuordnen, sondern auch in verschiedenen Prüfgeräten eine Speichereinheit vorzusehen, durch die im Prüfgerät unterschiedliche Funktionen ausgelöst werden können. Dies ist insbesondere bei sogenannten Stimuligeräten der Fall, die Signale nachbilden, die beim Betrieb des Fahrzeuges entstehen. Auch diese Speichereinheiten haben den Zweck, spezielle Geräte an unterschiedliche Fahrzeugtypen anzupassen, ohne dass dadurch die Zahl der Steuerleitungen erhöht werden muss. Damit diese Speichereinheit leicht ausgetauscht werden kann, ist es günstig, diese ebenfalls von aussen steckbar anzuordnen.

Eine weitere Erleichterung ergibt sich dadurch, dass zumindest ein Prüfgerät oder aber das gesamte Prüfsystem drahtlos fernsteuerbar ausgestaltet wird. Dadurch bleibt es der Bedienungsperson erspart, zu den Prüfgeräten gehen zu müssen. Besonders günstig ist es, wenn das fernzusteuernde Prüfgerät einen lichtempfindlichen Empfänger aufweist, der hinter einer Blende im Prüfgerät angebracht ist. Dadurch ist es auch möglich, mehrere Prüfgeräte oder Prüfsysteme im gleichen Raum zu betreiben. Prinzipiell sind auch andere Fernsteuerarten möglich, beispielsweise über Funk oder mit Ultraschall, jedoch haben lichtempfindliche Sender den Vorteil, dass sie genau auszurichten sind. Die Blende ist kostengünstig als eine Bohrung im Gerätegehäuse auszuführen. Der Empfänger ist zweckmässigerweise bezüglich der Blende verschiebbar angeordnet. Dadurch ergibt sich der Vorteil, dass der Empfangsbereich des Fernsteuerempfängers verändert werden kann, so dass er den Gegebenheiten in jeder Werkstatt individuell anpassbar ist. Besonders günstig ist es dabei, zur Fernsteuerung infrarotes Licht zu verwenden, da hierbei auf eine bereits weit entwickelte Technik zurückgegriffen werden kann. Durch die Vielzahl der Prüfmöglichkeiten des Prüfsystems ist es günstig, die Zahl der Tasten beschränkt zu halten, damit die Übersichtlichkeit nicht verlorengeht. Es ist daher günstig, die möglichen Prüfschritte neben den Messwerten auf dem Display zur Auswahl zu stellen und mittels Steuertasten und Cursor eine Anwahlmöglichkeit der Prüfschritte zu ermöglichen. Dadurch ist es möglich, auch ein komplexes Prüfsystem mit wenigen Tasten zu steuern, so dass die Übersichtlichkeit gewahrt bleibt. Dies führt des weiteren zu einer Reduzierung von Schaltern und Tasten, wodurch sowohl die Übersichtlichkeit als auch die Zuverlässigkeit des Prüfsystems erhöht wird. Des weiteren kann die Bedienungsperson durch das Display geführt werden. Bei dieser Ausgestaltung des Prüfsystems sind des weiteren auf einfache Art Erweiterungen oder Änderungen von Prüfwegen oder Prüfschritten möglich.

Zeichnung

Ausführungsbeispiele der Erfindung sind in der Zeichnung dargestellt und in der nachfolgenden Beschreibung näher erläutert. Es zeigen Fig. 1 ein Prüfsystem zur Diagnose von Fahrzeugen, Fig. 2 eine Zentraleinheit, wie sie bei der Diagnose von Fahrzeugen Verwendung findet, Fig. 3 ein Blockschaltbild zur Erläuterung der Funktion eines solchen Diagnosesystems, Fig. 4 die Anordnung eines lichtempfindlichen Empfängers im Prüfgerät und Fig. 5 ein Cursorsystem.

Beschreibung der Ausführungsbeispiele

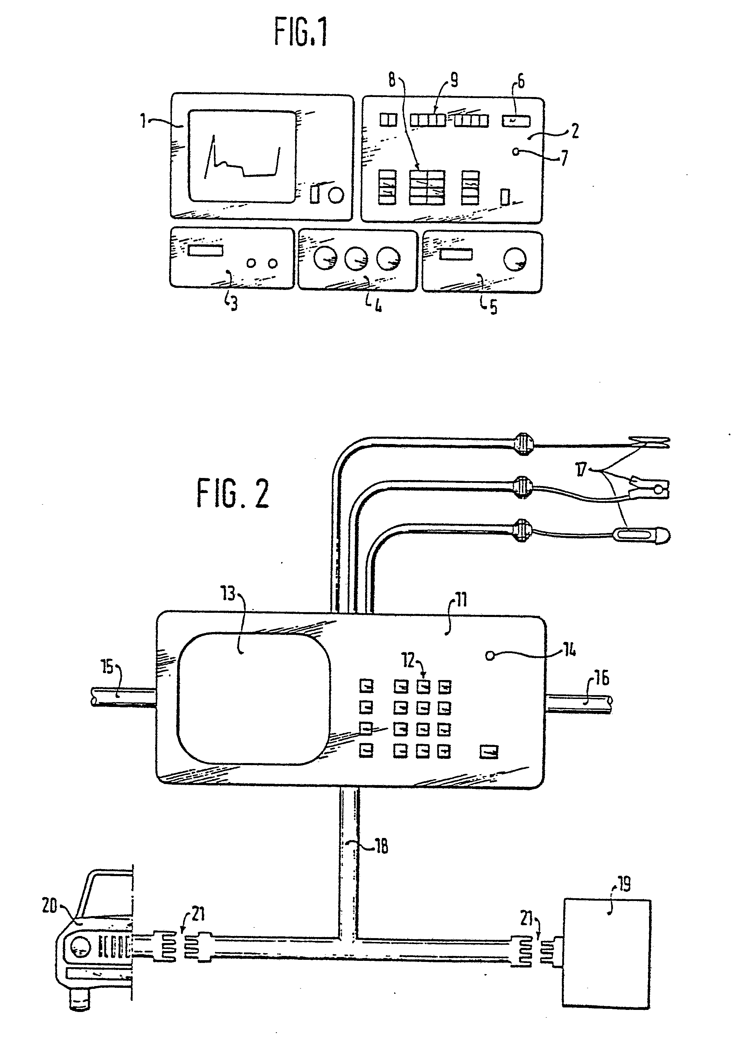

In Fig. 1 ist ein Beispiel eines Prüfsystems dargestellt. Oben links ist ein Oszillograph 1 angeordnet, mit dem Kurvenverläufe, beispielsweise der Zündung, sichtbar gemacht werden können. Neben dem Oszillographen 1 befindet sich ein Motortester 2, mit dem motorspezifische Messgrössen erfasst und ausgewertet werden können. Solche Grössen sind beispielsweise die Drehzahl, der Schliesswinkel der Zündung, der Verstellwinkel der Zündung, die Spannung am Zündunterbrecher und die Spannung an der Primärwicklung der Zündspule. Motortester 2 und Oszillograph 1 sind durch Steuerleitungen miteinander verbunden, so dass die vom Motortester 2 aufgenommenen Grössen auf dem Oszillographen 1 dargestellt werden können. Unterhalb des Oszillographen 1 und des Motortesters 2 sind andere Messgeräte, wie beispielsweise ein Stromprüfer 3, ein Spannungsprüfer 4 und eine Stimulieinheit 5. Diese Geräte haben Aussenabmessungen, die einem Vielfachen einer Grundrastereinheit entsprechen und daher mit dem Oszillographen 1 und dem Motortester 2 bündig abschliessen. Das Stimuligerät 5 dient dazu, bei stehendem Fahrzeug Signale nachzubilden, die beim Betrieb des Fahrzeugs auftreten, um damit signalverarbeitende Stufen im Fahrzeug zu testen. Solche Stufen sind beispielsweise elektronische Einspritzanlagen, elektronische Zündsysteme oder automatische Bremssysteme. Auch die Geräte 3, 4 und 5 stehen mit dem Motortester 2 über Steuerleitungen in Verbindung, so dass zum Fahrzeug nur ein Messkabelnetz geführt werden muss. An der rechten oberen Ecke des Motortesters 2 ist ein Ausschnitt 6 vorgesehen, in den eine Programmkassette eingeschoben werden kann. In dieser Programmkassette sind auf einem Datenträger, beispielsweise einer Speichereinheit, system- und prüflingsspezifische Programme gespeichert. Dadurch ist es möglich, das gesamte System an die einzelnen Kraftfahrzeuge individuell anzupassen. Unterhalb des Ausschnittes 6 ist eine Lochblende 7 angebracht, hinter der sich ein Fernsteuerempfänger befindet. Mittels einer Fernsteuereinheit kann daher der Motortester und die angeschlossenen Geräte ferngesteuert werden, d.h. es können verschiedene Prüfvorgänge ausgelöst werden, ohne dass das Gerät bedient werden muss. Für eine Bedienung am Gerät sind die Tastenfelder 8 vorgesehen, über denen sich eine Anzeigeeinheit 9 zur Anzeige der gemessenen Grössen befindet.

In Fig. 2 ist ein Systemtester 11 dargestellt, der wiederum eine Tasteneinheit 12 hat. Die gemessenen Daten werden auf einem Bildschirm 13 angezeigt. Hinter einer Lochblende 14 ist ein Fernsteuerempfänger angebracht, der Signale eines Fernsteuersenders empfangen kann, so dass das Gerät auch ferngesteuert werden kann. Links und rechts des Systemtesters gehen Steuerleitungen 15 und 16 ab, die zu weiteren Geräten, beispielsweise einem Stimuligerät oder einem Oszillographen führen. Neben der Erfassung von motorspezifischen Daten, wie sie auch bereits vom Motortester ermittelt werden können, ist ein Systemtester in der Lage, komplette elektronische Schaltungen zu überprüfen, wie sie beispielsweise bei elektronischen Getriebesteuerungen, elektronischen Gangschaltungen, elektronischen Zündanlagen oder elektronischen Einspritzanlagen verwendet werden. Daher weist der Systemtester nicht nur Anschlüsse 17 auf, die beispielsweise zum Messen des oberen Totpunktes der Drehzahl der Spannung und des Stromes dienen, sondern auch noch einen Systemeingang 18, an den elektronische Geräte 19 separat oder eingebaut in Kraftfahrzeugen 20 getestet werden können. Der Anschluss erfolgt über Steckverbindungen 21. Über die Steuerleitung 15 oder 16 gelangen von der Stimulieinheit Prüfimpulse in den Systemtester 11, die über den Systemeingang 18 dem elektronischen Gerät 19 zugeführt werden und einen Betrieb des Kraftfahrzeugs simulieren. Dadurch ist es möglich, auch bei einem Stillstand des Kraftfahrzeugs Daten festzustellen, die üblicherweise beim Betrieb auftreten.

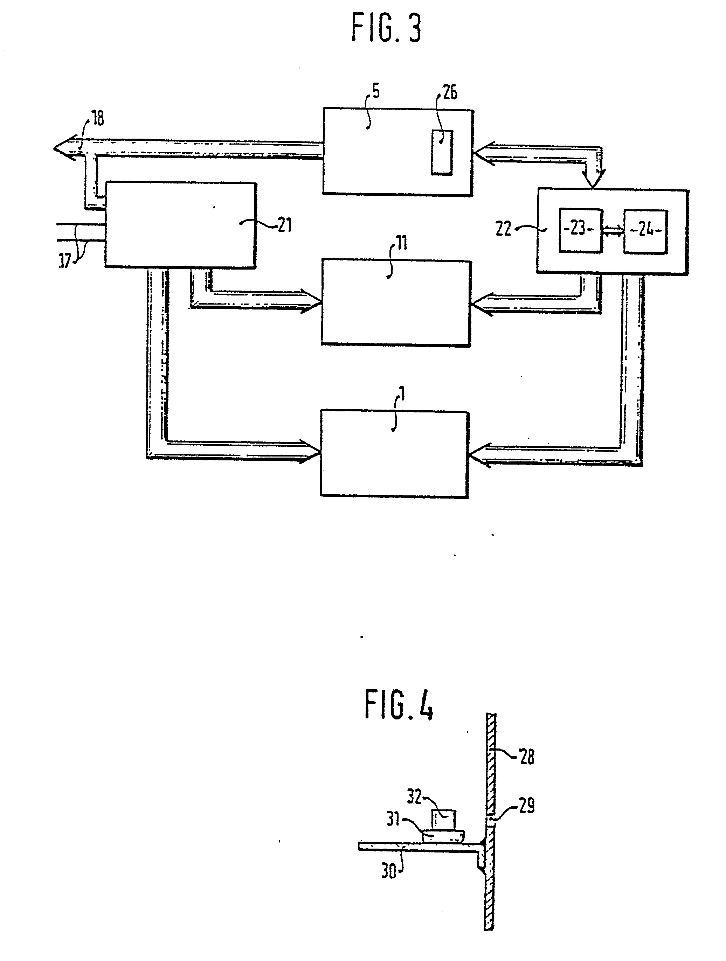

In Fig. 3 ist in einem Blockschaltbild schematisch die Funktion des Prüfsystems dargestellt. Die Anschlüsse 17 und ein Teil der Leitungen des Systemeingangs 18 gelangen an einen Eingangsteil 21, der über Steuerleitungen 16 mit verschiedenen Geräten verbunden ist, beispielsweise dem Systemtester 11 und dem Oszillographen 1. Alle vorhandenen Geräte werden von einer zentralen Steuereinheit 22 gesteuert, so dass der Oszillograph 1 und der Systemtester 11 auch mit der Steuereinheit über Steuerleitungen in Verbindung stehen. Die Steuereinheit weist im wesentlichen einen Mikrorechner 23 und einen Datenspeicher 24 auf, die untereinander über eine Datenleitung verbunden sind und im Bedarfsfall aus einem einzigen Chip bestehen. Durch den Mikrorechner werden die Steuerbefehle an den Oszillographen 1 und den Systemtester 11 abgegeben, während in dem Datenspeicher 24 die für den Testvorgang spezifischen Daten abgelegt sind. Der Datenspeicher 24 ist deswegen vorteilhaft steckbar ausgeführt, so dass er leicht für Messungen an verschiedenen Fahrzeugtypen ausgetauscht werden kann. Die Stimulieinheit 5 wird ebenfalls von der Steuereinheit 22 gesteuert. Die vom Stimuligerät 5 abgegebenen Signale gelangen über den Systemeingang 18 zu dem elektronischen Gerät 19 und die Antwort dieses Gerätes 19 zum Eingangsteil 21. Um die Impulse und die Belegung der Leitungen den vielfältigen elektronischen Schaltungen anzupassen, ist im Stimuligerät ebenfalls ein Datenspeicher 26 vorgesehen, der als Subsystem des Steuerteils 22 arbeitet. Dadurch ist auch bezüglich der Ausgangssignale eine individuelle Anpassung an das zu messende elektrische Gerät möglich. Der Datenspeicher 26 ist ebenfalls vorzugsweise steckbar ausgeführt. Nach der Durchführung des im Datenspeicher 26 festgelegten Testprogramms durch die Stimulieinheit 5 erfolgt eine Rückmeldung an die Steuereinheit 22, so dass von dieser der nächste Prüfvorgang ausgelöst werden kann.

Es ist zweckmässig, zur Erzielung einer grösstmöglichen Flexibilität die Blöcke sinnvoll zusammenzufassen. So ist es z.B. günstig, den Eingangsteil 21 und den Steuerteil 22 zusammen mit dem Systemtester 11 oder dem Motortester 2 in einem Gehäuse unterzubringen, während die Stimulieinheit 5 oder der Oszillograph 1 als Einzelgerät ausgeführt sind, so dass sie nur bei Bedarf angeschafft werden müssen. Dadurch lässt sich auch die Zahl der Steuerleitungen auf ein Minimum verringern und es sind keine Daten- und Adressbusse notwendig, wie sie sonst üblicherweise angewandt werden. Daten- und Adressbusse haben sich nämlich bei der Kraftfahrzeugprüfung nicht als vorteilhaft erwiesen, da leicht Störimpulse induziert werden können, die dann ein Fehlverhalten der Messgeräte auslösen. Durch den Eingangsteil 21 werden die an den Anschlüssen 17 und an dem Systemeingang 18 anliegenden Signale normiert. Triggerimpulsformerschaltungen zur Bildung eines Triggersignals, Anschlussleitungen zum Kraftfahrzeug und Adapter zur unterschiedlichen Adaption fahrzeugspezifischer Anschlusstechniken sind daher nur einmal erforderlich. Dies bedeutet eine wesentliche Verbesserung im Gegensatz zu üblichen Geräten. Im Eingangsteil 21 lässt sich zweckmässig auch die Empfängerschaltung für die fernbedienbaren Geräte unterbringen.

In Fig. 4 ist die Anbringung des Fernsteuerempfängers hinter der Lochblende dargestellt. In der Gehäusewand 28 eines Prüfgerätes ist eine Lochblende 29 in Form einer Bohrung angebracht, hinter der sich ein Fotoelement 32 befindet. Das Fotoelement ist auf einem Schlitten 31 gelagert, der verschiebbar auf einem Träger 30 angebracht ist, der an der Gehäusewand 28 befestigt ist. Als Fotoelement 32 eignet sich vorteilhafterweise eine Fotodiode im infraroten Bereich, die mit einer nicht dargestellten Auswerteschaltung verbunden ist. Durch die Verschiebbarkeit des Fotoelementes ist es möglich, den Empfangswinkel auf einfache Weise individuell einzustellen. Dies ist dann notwendig, wenn sich mehrere Prüfsysteme in einer Halle befinden, da ansonsten durch die Fernbedienung eines Prüfgerätes in den anderen Prüfgeräten ebenfalls Signale ausgelöst werden, die eine Fehlfunktion verursachen können. Durch geeignete Wahl des Lochdurchmessers und durch den Abstand des Fotoelementes von der Lochblende kann die Empfindlichkeit und damit die Ansprechentfernung sowie der maximale Ansprechradius in einem weiten Bereich variiert werden.

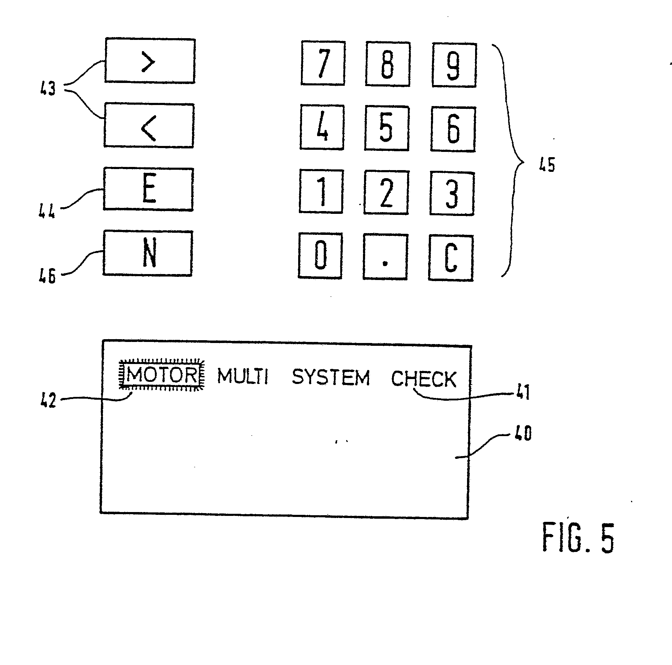

In Fig. 5 ist ein Cursorsystem dargestellt, wie es beispielsweise in Verbindung mit dem Oszillographen 1 aufgebaut sein kann. Auf dem Bildschirm 40 des Oszillographen 1 sind mögliche Prüfschrittgruppen, die als Schriftfelder 41 dargestellt sind, angegeben. Mögliche Prüfschrittgruppen sind beispielsweise Motortest, Einzelmessung, Systemtest, Eigentest. Der Cursor 42, beispielsweise ein blinkendes Feld, kann mit den Tasten 43 vorwärts oder rückwärts bewegt werden. Die ausgewählten Prüfschrittgruppen können durch die Taste 44 eingeschaltet werden. Dadurch verändert sich dann der Bildschirminhalt, und es erscheint entweder eine Untergruppe, aus der weiter ausgewählt werden kann, beispielsweise in der Stellung Motor die Zahl der Zylinder, die Betriebsspannung, der Schliesswinkel oder die Drehzahl oder es wird, wenn die Hierarchie erschöpft ist, der entsprechende Kennwert angezeigt. Über die Zifferntastatur 45 ist es möglich, von Hand spezifische Werte oder Kenndaten einzugeben, beispielsweise die Zylinderzahl oder die Sollspannung. Mit der Taste 46 kann jederzeit und aus jeder Ebene in die Grundstellung zurückgesprungen werden. Durch diese Massnahme ist es möglich, die Zahl der Tastaturen auf ein Minimum zu reduzieren. Der an sich vorhandene Bildschirm 40 des Oszillographen 1 kann diese Aufgabe zusätzlich übernehmen, so dass auch die Frontplatten nicht vergrössert werden oder ein neues Gerät angeschafft werden muss. Das gesamte Cursorsystem lässt sich einfach durch einen Mikroprozessor realisieren, wodurch eine einfache Systemanpassung an spezielle Anforderungen des Prüfsystems möglich ist, indem einfach die Speicherinhalte des dazugehörigen Datenspeichers verändert werden. Ein Um- oder Nachrüsten der Bedienungselemente entfällt.

**Patentansprüche**

1. Prüfsystem zur Diagnose von Kraftfahrzeugen oder Fahrzeugbestandteilen mit einzelnen, für sich betreibbaren Prüfgeräten, die in jeweils einem eigenen Gehäuse untergebracht sind, die über Steuerleitungen (15, 16) miteinander verbunden sind und die von einer zentralen Steuereinheit (22) gesteuert sind, dadurch gekennzeichnet, dass die Aussenabmessungen der Gehäuse der Prüfgeräte (1, 2, 3, 4, 5, 11) ein Teil oder ein Vielfaches einer Grundrastereinheit betragen, dass die Steuerleitungen (15, 16) steckbar ausgeführt sind, wobei die Steckeinrichtungen Ausbrüche aufweisen, die eine Fehlverbindung verhindern, und dass die zentrale Steuereinheit (22) in einem der Prüfgeräte (2, 11) integriert ist.

2. Prüfsystem nach Anspruch 1, dadurch gekennzeichnet, dass die zentrale Steuereinheit (22) aus einem Mikrorechner (23) gebildet ist, der von einem Datenspeicher (24) gesteuert ist.

3. Prüfsystem nach Anspruch 2, dadurch gekennzeichnet, dass der Datenspeicher (24) von aussen steckbar ist.

4. Prüfsystem nach einem der Ansprüche 1 bis 3, dadurch gekennzeichnet, dass eines oder mehrere der Prüfgeräte (5) durch einen zusätzlichen Datenspeicher (26) in ihrer Funktion veränderbar sind.

5. Prüfsystem nach Anspruch 4, dadurch gekennzeichnet, dass der zusätzliche Datenspeicher (26) steckbar ist.

6. Prüfsystem nach einem der Ansprüche 1 bis 5, dadurch gekennzeichnet, dass zumindest eines der Prüfgeräte (2, 11) drahtlos fernsteuerbar ist.

7. Prüfsystem nach Anspruch 6, dadurch gekennzeichnet, dass das fernzusteuernde Prüfgerät (2, 11) einen lichtempfindlichen Empfänger (32) aufweist, der hinter einer Blende (29) in dem betreffenden Prüfergerät (2, 11), angebracht ist.

8. Prüfsystem nach Anspruch 7, dadurch gekennzeichnet, dass als Blende (29) eine Bohrung im Gehäuse (28) des fernzusteuernden Gerätes dient.

9. Prüfsystem nach Anspruch 7 oder 8, dadurch gekennzeichnet, dass der lichtempfindliche Empfänger (32) in Lichteinfallrichtung bezüglich der Blende (29) verschiebbar angeordnet ist.

10. Prüfsystem nach einem der Ansprüche 6 bis 9, dadurch gekennzeichnet, dass zur Fernsteuerung Infrarotlicht Verwendung findet.

11. Prüfsystem nach einem der Ansprüche 1 bis 10, dadurch gekennzeichnet, dass Prüfschritte ganz oder teilweise auf einem Sichtgerät (40) dargestellt und mittels eines Cursors (42) auswählbar sind.

12. Prüfsystem nach Anspruch 11, dadurch gekennzeichnet, dass als Sichtgerät der Bildschirm (40) eines Oszillographen (1) vorgesehen ist.

13. Prüfsystem nach Anspruch 11 oder 12, dadurch gekennzeichnet, dass Einrichtungen, insbesondere erste Tasten (43), vorgesehen sind, die ein Verschieben des Cursors (42) ermöglichen.

14. Prüfsystem nach einem der Ansprüche 11 bis 13, dadurch gekennzeichnet, dass ein Tastenfeld (45) mit zweiten Tasten vorgesehen ist, das die Eingabe von Daten ermöglicht.

15. Prüfsystem nach Anspruch 13 oder 14, dadurch gekennzeichnet, dass dritte Tasten (44) vorgesehen sind, die die Aktivierung des durch den Cursor (42) angezeigten Prüfschritts ermöglichen.

16. Prüfsystem nach einem der Ansprüche 13 bis 15, dadurch gekennzeichnet, dass vierte Tasten (46) vorgesehen sind, die ein Rücksetzen des Cursors (42) ermöglichen.

## Claims

1. Test system for diagnostic investigation of motor vehicles or vehicle components, comprising individual test instruments which can be operated individually and are each accommodated in an individual housing, the test instruments being connected to one another via control lines (15, 16) and being controlled by a central control unit (22), characterised in that the outer dimensions of the housings of the test instruments (1, 2, 3, 4, 5, 11) are a fraction or a multiple of a basic grid unit, that the control lines (15, 16) have a plug-in construction, with the plugs and sockets having hole patterns which prevent incorrect connection, and that the central control unit (22) is integrated in one of the test instruments (2, 11).

2. Test system according to Claim 1, characterised in that the central control unit (22) consists of a microcomputer (23) which is controlled from a data store (24).

3. Test system according to Claim 2, characterised in that the data store (24) can be plugged in externally.

4. Test system according to one of Claims 1 to 3, characterised in that the function of one or more of the test instruments (5) can be changed by means of an additional data store (26).

5. Test system according to Claim 4, characterised in that the additional data store (26) can be plugged in.

6. Test system according to one of Claims 1 to 5, characterised in that at least one of the test instruments (2, 11) is capable of wireless remote control.

7. Test system according to Claim 6, characterised in that the remote-control operated test instrument (2, 11) has a light-sensitive receiver (32) which is mounted behind a diaphragm (29) in the particular test instrument (2, 11).

8. Test system according to Claim 7, characterised in that a hole in the housing (28) of the remote-control operated instrument serves as the diaphragm (29).

9. Test system according to Claim 7 or 8, characterised in that the light-sensitive receiver (32) is arranged so as to be movable relative to the diaphragm (29) in the direction of incidence of the light.

10. Test system according to one of Claims 6 to 9, characterised in that infrared light is used for remote control.

11. Test system according to one of Claims 1 to 10, characterised in that test steps are wholly or partially shown on a display unit (40) and can be selected by means of a cursor (42).

12. Test system according to Claim 11, characterised in that the screen (40) of an oscillograph (1) is used as the display unit.

13. Test system according to Claim 11 or 12, characterised in that devices, in particular a first set of keys (43), are provided to permit moving the cursor (42).

14. Test system according to one of Claims 11 to 13, characterised in that a keyboard (45) with a second set of keys is provided to permit data inputting.

15. Test system according to Claim 13 or 14, characterised in that a third set of keys (44) is provided, which keys permit activating the test step indicated by the cursor (42).

16. Test system according to one of Claims 13 to 15, characterised in that a fourth set of keys (46) is provided, which keys permit resetting the cursor (42).

**Revendications**

1. Système de contrôle pour le diagnostic de véhicules automobiles ou bien d'éléments constitutifs de véhicules, avec des appareils de contrôle individuels susceptibles d'être exploités isolément qui sont respectivement logés dans un boîtier qui leur est propre, qui sont reliés entre eux par l'intermédiaire de conducteurs de commande (15, 16) et qui sont commandés à partir d'une unité de commande centrale (22), système caractérisé en ce que les dimensions externes des boîtiers des appareils de contrôle (1, 2, 3, 4, 5, 11) correspondent à une partie ou à un multiple d'une unité de grille de base, en ce que les conducteurs de commande (15, 16) sont réalisés de façon enfichable, les dispositifs d'enfichage comportant des cavités qui empêchent une liaison erronée, et l'unité centrale de commande (22) étant intégrée dans l'un des appareils de contrôle (2, 11).

2. Système de contrôle selon la revendication 1, caractérisé en ce que l'unité centrale de commande (22) est constituée par un micro-calculateur (23) commandé à partir d'une mémoire de données (24).

3. Système de contrôle selon la revendication 2, caractérisé en ce que la mémoire de données (24) est susceptible d'être enfichée à partir de l'extérieur.

4. Système de contrôle selon une des revendications 1 à 3, caractérisé en ce que le fonctionnement d'au moins un des appareils de contrôle (5) est susceptible d'être modifié par une mémoire de données supplémentaire (26).

5. Système de contrôle selon la revendication 4, caractérisé en ce que la mémoire de données supplémentaire (26) est enfichable.

6. Système de contrôle selon une des revendications 1 à 5, caractérisé en ce qu'au moins un des appareils de contrôle (2, 11) est susceptible d'être commandé à distance sans fil.

7. Système de contrôle selon la revendication 6, caractérisé en ce que l'appareil de contrôle (2, 11) devant être commandé à distance comporte un récepteur (32) sensible à la lumière qui est mis en place dans l'appareil de contrôle considéré (2, 11) derrière un diaphragme (29).

8. Système de contrôle selon la revendication 7, caractérisé en ce qu'un perçage dans le boîtier (28) de l'appareil devant être commandé à distance, sert de diaphragme (29).

9. Système de contrôle selon l'une des revendications 7 ou 8, caractérisé en ce que le récepteur sensible à la lumière (32) dans le dispositif sensible à la lumière, est prévu coulissant par rapport au diaphragme (29).

10. Système de contrôle selon une des revendications 6 à 9, caractérisé en ce qu'on utilise pour la commande à distance, de la lumière infra-rouge.

11. Système de contrôle selon une des revendications 1 à 10, caractérisé en ce que des opérations de contrôle sont représentées en totalité ou partiellement sur un appareil de visualisation (40) et sont susceptibles d'être sélectionnées à l'aide d'un curseur (42).

12. Système de contrôle selon la revendication 11, caractérisé en ce qu'il est prévu comme appareil de visualisation, l'écran (40) d'un oscillographe (1).

13. Système de contrôle selon revendication 11 ou 12, caractérisé en ce qu'il est prévu des dispositifs notamment de premières touches (43), qui permettent un déplacement du curseur (42).

14. Système de contrôle selon une des revendications 11 à 13, caractérisé en ce qu'il est prévu un clavier (45) avec des secondes touches qui permet l'introduction de données.

15. Système de contrôle selon l'une des revendications 13 ou 14, caractérisé en ce qu'il est prévu des troisièmes touches (44) qui permettent l'activation de l'opération de contrôle indiquée par le curseur (42).

16. Système de contrôle selon une des revendications 13 à 15, caractérisé en ce qu'il est prévu des quatrièmes touches (46) permettant une remise à l'état initial du curseur (42).

# FIG.1

# FIG. 2

# FIG. 3

# FIG.4

43 — > <

44 — E

46 — N

45 — 7 8 9
4 5 6
1 2 3
0 . C

42 — MOTOR MULTI SYSTEM CHECK — 41

40

FIG. 5